Europäisches Patentamt

European Patent Office

Office européen des brevets

(11) Veröffentlichungsnummer: **0 433 486 A1**

## (12) EUROPÄISCHE PATENTANMELDUNG

(21) Anmeldenummer: 89123708.3

(22) Anmeldetag: 22.12.89

(51) Int. Cl.⁵: G03B 21/62

(43) Veröffentlichungstag der Anmeldung:
26.06.91 Patentblatt 91/26

(84) Benannte Vertragsstaaten:
FR GB IT

(71) Anmelder: BKE BILDTECHNISCHES
KONSTRUKTIONS- UND
ENTWICKLUNGSBÜRO INH. ERNST
STECHEMESSER
Industriestrasse 1-3
W-3412 Nörten-Hardenberg(DE)

(72) Erfinder: Stechemesser, Ernst
Marienstein 7
W-3412 Nörten-Hardenberg(DE)

(54) Rückprojektions-Bildscheibe.

(57) Gegenstand der Erfindung ist eine Bildscheibe für Durchlicht-Projektion, die eine besonders kontrastreiche und lichtstarke Projektion auch in hellen Räumen ermöglicht.

Bei Durchlicht-Projektionsscheiben nach der Erfindung befinden sich auf der Scheibenvorderseite linien- oder matrixförmig angeordnete Licht-Durchlaßbereiche (8), die von Absorptionsbereichen (9) umgeben sind, wobei die Fläche der Durchlaßbereiche in der Regel kleiner als die gesamte Fläche der Lichtabsorptionsbereiche ist.

Das von der Scheiben-Rückseite (1) her eintretende Projektionslicht (5) wird durch dach- oder kegelartig ausgebildete Licht-Leitkörper (2) durch Totalreflexion zu den frontseitigen Austrittsflächen (8) geleitet. Sowohl die Eintrittsflächen (6), wie auch die Austrittsflächen (8) können als plan-oder sphärisch bzw. asphärisch gewölbte Flächen ausgebildet sein.

Die Lichtleitkörper (2) können, wenn sie in matrixförmiger Anordnung benutzt werden, als Kreis- oder Polygonkegel ausgebildet sein.

Durchlicht-Projektionsscheiben nach der Erfindung können mit Fresnellinsen-Platten kombiniert werden. Sie eignen sich besonders für die Projektion in hellen Räumen mit Tageslicht-Einfall.

In der beigefügten Abbildung ist ein Beispiel für einen Schnitt durch eine Projektionsscheibe nach der Erfindung dargestellt.

FIG. 1

# RÜCKPROJEKTIONS-BILDSCHEIBE

Gegenstand der Erfindung ist eine Bildscheibe für Durchlicht-Projektion, die eine besonders kontrastreiche und lichtstarke Projektion auch in hellen Räumen ermöglicht.

Es sind bereits zahlreiche Durchlicht-Bildschirme bekannt, die zum Teil gute Hellraum-Projektionseigenschaften aufweisen. Trotzdem besteht auf diesem Gebiet ein weiterer Verbesserungsbedarf, da der Wunsch und die Notwendigkeit bestehen, teilweise nicht nur in künstlich beleuchteten Räumen Projektionsdarstellungen zu realisieren, sondern die Projektion sogar unter Tageslichtverhältnissen, im Extremfall bei direkter Sonneneinstrahlung vorzunehmen.

Da alle bisher bekannten Durchlicht-Projektionsscheiben jedoch noch einen in der Regel erheblichen Anteil des von außen auf die Frontseite der Scheibe auftreffenden Umgebunslichts reflektieren, kann nicht der erforderliche Kontrast erzielt werden, der notwendig ist, um bei Tageslicht und insbesondere bei direkter Sonneneinstrahlung eine zufriedenstellende Bildprojektions zu realisieren.

Gegenstand der Erfindung war daher die Entwicklung einer Durchlicht-Projektionsscheibe, mit der eine erhebliche Kontrastverbesserung möglich ist, so daß eine qualitativ einwandfreie Projektion auch unter extremen Umgebungsbedingungen, d.h. bei Tageslicht und Sonneneinstrahlung durchgeführt werden kann.

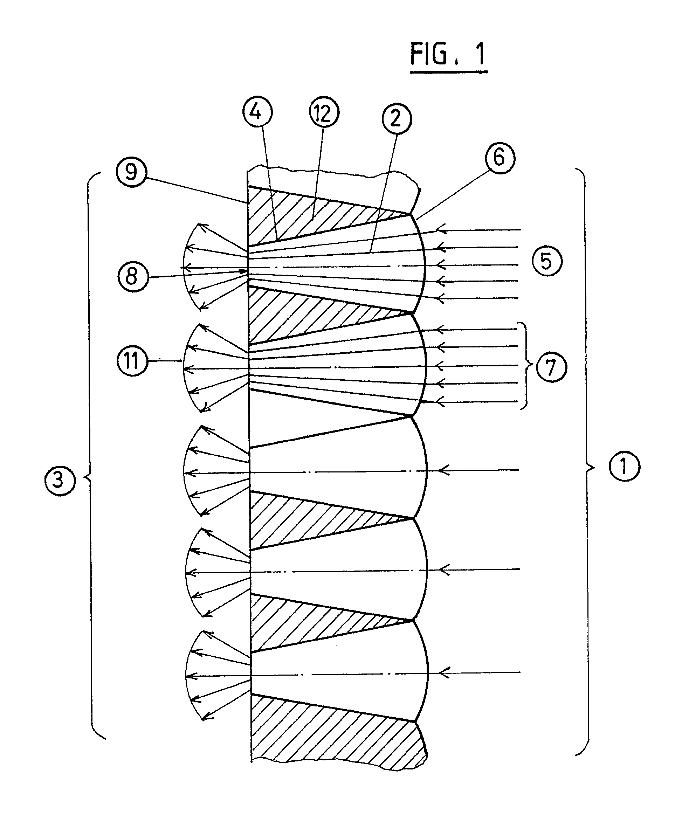

Der prinzipielle Aufbau einer Bildwand nach der Erfindung ist in Fig. 1 an einem Beispiel dargestellt. Abgebildet ist ein Schnitt durch eine Projektionsscheibe nach der Erfindung. Die dem Projektor zugewandte Scheiben-Rückseite (1) ist mit einer fein gerasterten Linsenstruktur versehen, die als Linien-oder Matrix-Struktur ausgebildet sein kann. Den Linsenstrukturen auf der Rückseite sind ebenfalls linien- oder matrixähnlich ausgebildete Dach- oder Kegelstrukturen auf der Vorderseite (3) der Durchlicht-Projektionsscheibe zugeordnet.

Die Dach- bzw. Lichtkegelflanken (4) sind dabei jeweils so geneigt, daß von der Rückseite in die Scheibe eintretende Projektionsstrahlen (5) einer Total-Reflexion an der Innenseite der Dach- oder Kegelflächen (2) unterworfen werden. Zusätzlich sind die Brennweiten der rückseitigen linien- oder matrixförmigen Linsensysteme (6) so abgestimmt, daß eine möglichst optimale Bündelung der in den rückseitigen Teilbereich (7) eintretenden Lichtstrahlung im Bereich der frontseitigen Lichtaustrittsöffnungen (8) erfolgt.

Der hohe Kontrast von Durchlicht-Projektionsscheiben nach der Erfindung wird dadurch erzielt, daß eine Art Ventilwirkung beim rückseitigen Lichtdurchtritt durch die Projektionsscheibe realisiert wird. Dies erfolgt dadurch, daß der Lichteintritt auf der Scheibenrückseite (1) im Bereich der gesamten Oberfläche möglich ist, wogegen der Austritt auf der Vorderseite (3) nur in bestimmten Öffnungsbereichen (8) erfolgt, deren Fläche nur ein Anteil von weniger als 50 % der Gesamt-Scheibenfläche ausmacht. Die auf der Frontseite (3) verbleibende Restfläche (9) wird durch entsprechende Einfärbung oder Oberflächen-Ausbildung so gestaltet, daß sie von vorne auf die Scheibe auftreffendes Umgebungslicht möglichst weitgehend absorbiert.

Die Funktion der Durchlicht-Projektionsscheibe nach der Erfindung stellt sich also wie folgt dar:

Von der Scheiben-Rückseite (1) her tritt die Projektions-Strahlung (5) auf die Scheibenfläche (7) auf. Durch eine Vielzahl linien- oder matrixförmiger Linsenstrukturen (6) wird die Strahlung in den einzelnen Teilbereichen der Projektionsscheibe jeweils so gebündelt, daß sie in Abhängigkeit von der Brennweite der rückseitigen Linsensysteme und der Scheibendicke möglichst optimal in kleinflächigen, ebenfalls linien-oder matrixförmig ausgebildeten Austrittsbereichen (8) gebündelt wird. Die auf der Scheiben-Vorderseite (3) gelegenen Austrittsbereiche (8) sind umgeben von Absorptionsflächen (9), die das von vorne auf die Scheibe auftreffende Umgebungslicht möglichst weitgehend absorbieren. Da die Absorptionsflächen (9) im Verhältnis zu den Lichtaustrittsbereichen (8) einen größeren Teil der Scheibenvorderfläche (3) einnehmen, wird ohne Verlust an Projektionsstrahlung bzw. Bildhelligkeit eine Absorption des überwiegenden Teils von der Frontseite her auffallenden Störlichts erzielt.

Dadurch ergibt sich auch unter ungünstigen Umfeldbedingungen ein hoher Kontrast, so daß eine Projektion auch im direkten Tageslicht oder bei Sonnenstrahlung möglich wird, wenn eine entsprechende Steigerung des frontseitigen Absorptionsanteils durch Verkleinerurung der Lichtaustrittsflächen (8) bei gleichzeitiger Anpassung der Fokussierung des von der Rückseite her einfallenden Projektionslichtes (5) erfolgt. Mit vertretbarem technischen und wirtschaftlichen Aufwand können bei Durchlicht-Projektionsscheiben nach der Erfindung ohne wesentliche Schwächung des rückseitig eintretenden Projektionslichtes (5) frontseitige Absorptions-Flächenanteile von ca. 75 % der Gesamtscheibenfläche erzielt werden.

Die vorderseitigen Lichtaustrittsflächen (8) sind dann entsprechend auf 25 % der Gesamtscheibenvorderfläche (3) reduziert. Nur 1/4tel des von vorn auf die Scheibe auftreffenden Störlichts wird im Falle dieses Beispiels reflektiert und kann zu einer Kontrastminderung und der dadurch bedingten Verschlechterung der Bildqualität führen.

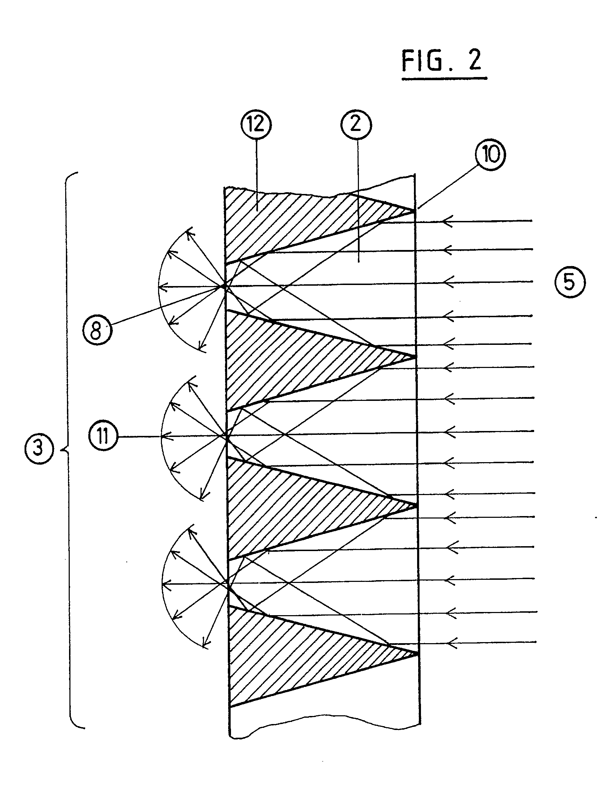

Bildwände nach der Erfindung können auch, wie in Fig. 2 dargestellt, mit einer rückseitig plan ausgebildeten Oberfläche (10) hergestellt werden. In diesem Falle werden die eintretenden Projektionsstrahlen (5) allein durch die an den Innenseiten der dach- oder kegelförmigen Frontstrukturen 2 durch Totalreflexionen so abgelenkt, daß ein diffuser Lichtaustritt aus den Öffnungen (8) erfolgt. In diesem Falle wird das austretende Gesamt-Projektionslicht (11) über einen großen horizontalen und vertikalen Raumwinkel verteilt, so daß aus einer speziellen Betrachtungsposition heraus eine Reduzierung der Bildhelligkeit gegenüber einer Scheibe gemäß Fig. 1 wahrgenommen wird, während jedoch gleichzeitig bei Projektionsscheiben nach Fig. 2 infolge der hohen Lichtstreuung auf der Austrittsseite (3) eine sehr gute horizontale und vertikale Seitensichtigkeit erreicht wird.

Projektionsscheiben nach der Erfindung können aus transparenten oder glasklaren Kunststoffen wie auch aus Silikatglas hergestellt werden. Vorzugsweise wird jedoch transparentes Acrylglas benutzt. Dieses kann zur Modifizierung der Scheiben-Eigenschaften in unterschiedlicher Weise eingefärbt oder durch Einlagerung von Pigmenten und Füllstoffen, vorzugsweise Quarzmehl, modifiziert werden.

Durchlicht-Projektionsscheiben nach der Erfindung können im Gieß- oder Pressverfahren hergestellt werden. Sie können aber auch durch spanende Bearbeitung produziert werden. Die absorbierenden Scheibenflächen auf der Vorderseite 3 können in einfacher Weise dadurch produziert werden, daß zunächst mit einem der vorstehend genannten Produktionsverfahren die Oberfläche mit erforderlichen linien- oder matrixförmigen Dach-bzw. Kegelstrukturen hergestellt wird. Dann wird die gesamte Vorderfläche mit einem absorbierenden Lack oder einer Vergußmasse (12) abgedeckt. Durch leichtes Abschleifen der Oberfläche werden anschließend die Lichtaustrittsöffnungen (8) wieder freigelegt.

Die Linsenstrukturen (6) auf der Scheibenrückseite (1) können aus sphärischen oder asphärischen Flächen gebildet werden. Die Dach- und Kegelstrukturen (2) auf der Vorderseite (2) können durch plane oder gekrümmte Lichtaustrittsflächen (8) begrenzt werden. Die gekrümmten Lichtaustrittsflächen (8) können sphärische oder asphärische Oberflächen besitzen. Bei den Kegeln kann es sich sowohl um Kreis- wie auch um Polygon-Kegel mit planen oder gekrümmten Teilflächen handeln. Die Grenzflächen können sowohl voll verspiegelt wie auch in unterschiedlichen Stufen mattiert ausgeführt werden. Darüber hinaus sind alle denkbaren Kombinationen der vorstehend aufgeführten Varianten möglich.

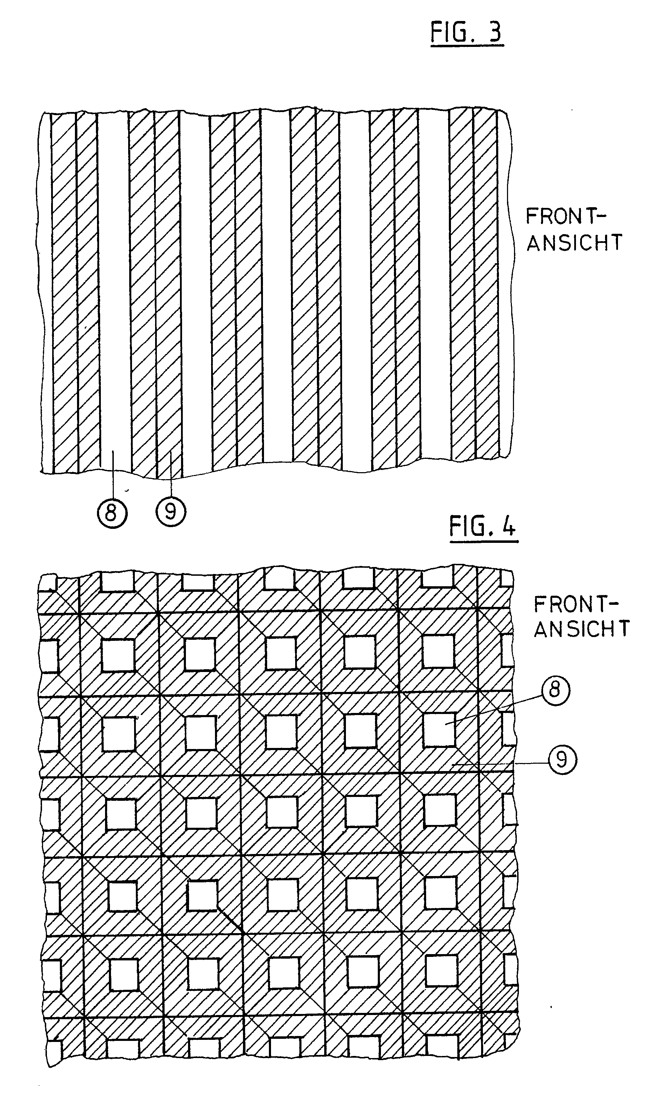

In Fig. 3 ist ein Beispiel für die Vorderseitenausführung einer Bildwand nach der Erfindung mit linienförmiger Austritts-und Absorptionsflächenstruktur dargestellt.

Fig. 4 zeigt ein Beispiel für eine Scheibenvorderseite mit matrixförmiger Kegelstruktur, wobei die Kegel quadratische Querschnitte besitzen.

Durchlicht-Projektionsscheiben nach der Erfindung können zur weiteren Verbesserung der Wirkung mit unterschiedlich dimensionierten und gestalteten Fresnellinsen-Platten kombiniert werden, wobei die Fresnelstruktur sich auf getrennten Scheiben oder im Falle der rückseitig planen Ausführung der Bildwand nach der Erfindung auch direkt auf der rückseitigen Scheibenebene befinden können.

## Ansprüche

1. Bildwand für Durchlicht-Projektion, dadurch gekennzeichnet,
daß sich auf der Scheiben-Vorderseite linien- oder matrixförmig angeordnete Lichtdurchlaßbereiche (8) befinden, die von Absorptionsbereichen (9) umgeben sind, wobei die Fläche der Durchlaßbereiche in der Regel kleiner als die Gesamtfläche der Licht-Absorptionsbereiche ist,
daß sich auf der Scheiben-Rückseite in einer ebenfalls linien- oder matrixförmigen Struktur und Anordnung sphärische oder asphärische Linsenkörper (2) befinden, die so angeordnet und dimensioniert sind, daß das von der Rückseite eintretende Projektionslicht (7) optimal auf die zugeordneten Licht-Austrittsflächen (8) auf der Scheibenvorderseite (3) fokussiert wird,
daß die Lichtaustrittsflächen (8) den vorderseitigen Abschluß von linien- oder rasterförmig in Zuordnung zu den rückseitigen Linsenstrukturen (6) angeordneten dach-oder kegelartig ausgebildeten Lichtleitkörpern (2)bilden, deren Seitenflächen so gegen die Hauptachse des rückseitig einfallenden Lichtes geneigt sind, daß die Strahlen durch einfache oder mehrfache Totalreflexion gesammelt zu den Austrittsflächen (8) geführt werden.

2. Durchlicht-Projektionsscheibe nach Anspruch 1, dadurch besonders gekennzeichnet,
daß die Scheibenrückseite als plane Fläche ausgebildet ist.

3. Durchlicht-Projektionsscheibe nach Ansprüchen 1 und 2, dadurch besonders gekennzeichnet,
daß die linien- oder rastermäßig angeordneten Lichtleitelemente (2) als dachförmige Linnsenkörper oder als Kegel mit kreisrundem, ovalem oder polygonen Querschnitt ausgebildet sind.

4. Durchlicht-Projektionsscheibe nach Ansprüchen 1 und 2, dadurch besonders gekennzeichnet,
daß die seitlichen Begrenzungsflächen (4) der dachkegelförmigen Lichtleit-Elemente (2) plan oder gewölbt ausgeführt sind.

5. Durchlicht-Projektionsscheibe nach Ansprüchen 1 bis 4, dadurch besonders gekennzeichnet, daß die frontseitigen Lichtleit-Elemente (2) mit den an ihren Oberseiten befindlichen Lichtaustrittsflächen (8) auf ihren Seitenflächen mit einer möglichst lichtundurchlässigen, das Außenlicht stark absorbierenden Beschichtung versehen sind, die im Spritz-, Gieß- oder einem entsprechendem geeigneten Oberflächen-Behandlungsverfahren aufgetragen sind.

6. Durchlicht-Projektionsscheibe nach Ansprüchen 1 bis 5, dadurch besonders gekennzeichnet, daß die frontseitigen Lichtleit-Elemente (2) in eine möglichst lichtundurchlässige, in ihrer Oberfläche stark absorbierende Beschichtung eingebettet sind, so daß die Lichtaustrittsflächen (8) mit der Einbettungsschicht plan abschließen oder teilweise aus dieser herausragen.

FIG. 1

## FIG. 2

## FIG. 3

FRONT-
ANSICHT

⑧ ⑨

## FIG. 4

FRONT-
ANSICHT

⑧

⑨

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | DE-A-3820966 (BKE BILDTECHNISCHES KONSTRUKTIONS- UND ENTWICKLUNGSBUERO) <br> * das ganze Dokument * <br> --- | 1-6 | G03B21/62 |
| E | EP-A-361917 (DAI NIPPON PRINTING CO.,LTD.) <br> * Seite 3, Zeilen 23 - 52; Ansprüche 1, 4-7; Figuren 2, 3 * <br> --- | 1, 3-6 | |
| X | AT-B-180418 (W.HESSE ET AL.) <br> * Seite 1, Zeile 93 - Seite 2, Zeile 86; Figuren * <br> --- | 1, 3-6 | |
| A | US-A-3218924 (W.S.MILLER) <br> * Spalte 1, Zeile 54 - Spalte 6, Zeile 3; Figuren 1-11 * <br> ----- | 1-6 | |

| | RECHERCHIERTE SACHGEBIETE (Int. Cl.5) |
|---|---|
| | G03B |

Der vorliegende Recherchenbericht wurde für alle Patentansprüche erstellt

| Recherchenort | Abschlußdatum der Recherche | Prüfer |
|---|---|---|
| DEN HAAG | 17 AUGUST 1990 | HERYET C.D. |